# EUROPÄISCHE PATENTSCHRIFT

(11) **EP 0 524 365 B1**
(45) Veröffentlichungstag und Bekanntmachung des Hinweises auf die Patenterteilung: **20.12.1995**
(21) Anmeldenummer: 91810588.3
(22) Anmeldetag: 22.07.1991
(51) Int. Cl.: B65G 47/61, B65G 17/32

(54) **Einrichtung zum Transportieren einer Last**
Load transporting device
Dispositif pour le transport d'une charge

(43) Veröffentlichungstag der Anmeldung: 27.01.1993
(73) Patentinhaber: Rohrer, Gottfried, CH-9403 Goldach (CH)
(72) Erfinder: Rohrer, Gottfried, CH-9403 Goldach (CH)
(74) Vertreter: Althoff, Gerhard

(56) Entgegenhaltungen:
- EP-A- 0 307 045
- FR-A- 2 651 759
- GB-A- 2 166 192

## Beschreibung

Die Erfindung bezieht sich auf eine Einrichtung zum Transportieren und Übergeben einer Last, mit einem umlaufend angetriebenen Transportseil und mindestens einer daran angeordneten und im wesentlichen als Tragarm für die Last ausgebildeten Transportvorrichtung sowie mit mindestens einer Übergabestation, welche an einer etwa in parallelem Abstand sowie in Längsrichtung des Transportseils orientierten Schiene angeordnet und mit Mitteln in Form eines Hebels versehen ist, welcher bei der Transportbewegung des mit einem Schlosselement für die Lagerung einer Lastzange versehenen Tragarms mit einem mit der Lastzange wirkverbundenen Betätigungsglied derart in Eingriff bringbar sind, dass ein zwangsläufiges Öffnen der Lastzange für die Übergabe der daran angehängten Last erfolgt.

Einrichtungen der genannten Art dienen vor allem zur Bewältigung von Transportproblemen in nicht oder nur unzureichend erschlossenen Gebieten. Die Einrichtung wird beispielsweise in schwer zugänglichen Plantagen eingesetzt, bei welchen Fruchtstauden, insbesondere druckempfindliche und relativ schwere Bananenstauden ohne Beschädigungen von der Plantage direkt in einen Hangar zu transportieren sind. Diese Einrichtungen sind derart auszubilden, dass diese an die gegebene Plantagentopographie anpassbar und ohne besonderen Aufwand einsetzbar sind.

Aus der EP-A 0 307 045 ist zum Transportieren von Kleidungsstücken eine sogenannte Überkopftransporteinrichtung bekannt, welche im wesentlichen eine zwischen zwei beabstandeten Wänden angeordnete und in Transportrichtung orientierte Führungsschiene, ein mittels in Transportrichtung beabstandeter und mittels Rollen an der Führungsschiene gelagerter Trägerelemente angehängtes Transportseil sowie mehrere im Abstand zueinander an vorbestimmten Positionen angeordnete Auskuppelvorrichtungen umfasst, wobei an den Trägerelementen jeweils eine klauenförmige Greifeinrichtung vorgesehen ist, welche bei der in Transportrichtung orientierten Bewegung und in Abhängigkeit einer vorbestimmten Position gegen die Rückstellkraft einer Zugfeder durch die jeweils zugeordnete Auskuppelvorrichtung geöffnet wird, so dass der an der Greifeinrichtung eingehängte Kleiderhaken freigegeben und zusammen mit dem Kleidungsstück herabfällt und von einem an der zugeordneten Wand angeordneten sowie in Richtung des Trägerelements schwenkbaren Gleitelement aufgenommen wird und anschliessend selbsttätig in Richtung der jeweiligen Wand gleitet und hier im wesentlichen als Kleiderbündel gestapelt wird.

Zum Transportieren grösserer Lasten, insbesondere in Form von Bananenstauden ist aus der FR-A 2 651 759 eine Transporteinrichtung mit zugeordneter Übergabestation bekannt, bei welcher die einzelne an einem Lasthaken eines Tragarms hängende Bananenstaude beim Erreichen einer bestimmten Position von einer Aufnahmegabel des entsprechend positionierten Tragarms relativ zu dem Lasthaken angehoben und ausgehängt und anschliessend um eine vertikale Achse in horizontaler Ebene um einen Winkel von 180° verschwenkt und einem mit weiteren Lasthaken versehenen Tragarm der Fördereinrichtung übergeben wird.

Der Erfindung liegt die Aufgabe zugrunde, eine Einrichtung gemäss der im Oberbegriff des Patentanspruchs 1 genannten Gattung so zu verbessern, dass die an der Lastzange angeordnete Last bei kontinuierlich umlaufend angetriebenen Transportseil einer vorbestimmten Stelle zugeführt und an dieser problemlos freigegeben sowie für den Weitertransport übernommen werden kann.

Diese Aufgabe wird dadurch gelöst, dass der Übergabestation mindestens ein an der Schiene angeordnetes und relativ dazu in Transportrichtung verschiebbares Fahrwerk mit mindestens einem daran angeordneten Haltedorn zuführbar ist, wobei der Haltedorn zur hängenden Aufnahme mit der von der geöffneten Lastzange freigegebenen Last in Eingriff bringbar ist.

Hierdurch ist es möglich, weitgehend sämtliche Lastarten, insbesondere aber druckempfindliche Bananenstauden während des Transports an vorbestimmten Positionen automatisch und fliegend an den in dieser Bewegungsphase entsprechend eingeschwenkten Haltedorn hängend zu übergeben und durch die kinetische Energie zusammen mit dem Fahrwerk in eine andere Richtung weiter zu transportieren. Die Zangenteile der Lastzange wirken dabei ausschliesslich als Schliessmechanismus und der an der Bananenstaude angeordnete Lastring ist dabei lose zwischen den beiden als Zangenmaul ausgebildeten Zangenteilen gehalten, wodurch die einzelne Bananenstaude in vorteilhafterweise sowie in Abhängigkeit der jeweiligen Plantagentopographie für den störungsfreien Transport selbsttätig in die Schwerpunktlage gebracht wird.

Weitere Merkmale der Erfindung ergeben sich aus der folgenden Beschreibung in Verbindung mit den in der Zeichnung dargestellten Ausführungsbeispielen.

Die Erfindung wird nachstehend mit Bezugnahme auf die Zeichnung beschrieben. Es zeigt:
- Fig.1: eine in schematisch, perspektivischer Ansicht dargestellte Einrichtung mit einer Transportvorrichtung zur Aufnahme einer Last sowie eine entsprechend zugeordnete Übergabestation für die Last;
- Fig.2: die in Ansicht dargestellte Einrichtung gemäss Fig.1 mit verschiedenen Phasen zur Übergabe der Last;
- Fig.3: die in schematischer Seitenansicht dargestellte Transportvorrichtung für die Einrichtung gemäss Fig.1 und Fig.2;
- Fig.4: ein in Schnittansicht und in grösserem Massstab dargestelltes und mit einer Lastzange versehenes Schlosselement für die Transportvorrichtung gemäss Fig.1;
- Fig.5: das in Seitenansicht dargestellte Schlosselement gemäss Pfeilrichtung Z in Fig.4;
- Fig.6: ein weiteres Ausführungsbeispiel eines Schlosselements in der Schliessstellung der Lastzange; und
- Fig.7: das Schlosselement gemäss Fig.7 in der Offenstellung der Lastzange:

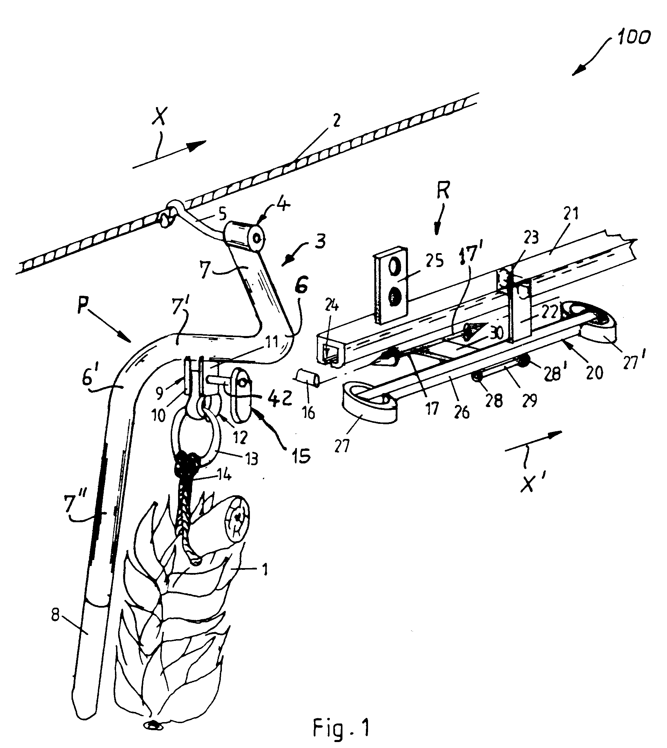

In Fig.1 ist in perspektivischer Ansicht eine in der Gesamtheit mit 100 bezeichnete Einrichtung zum Transportieren und Übergeben einer Last 1 (Transportgut) dargestellt. Die Einrichtung 100 umfasst ein mit nicht dargestellten Mitteln in Pfeilrichtung X bewegtes Transportseil 2, an welchem mindestens eine damit in Wirkverbindung stehende und in der Gesamtheit mit P bezeichnete Transportvorrichtung angeordnet ist. Weiterhin ist zur Übergabe der Last 1 mindestens eine in der Gesamtheit mit R bezeichnete Übergabestation vorgesehen.

Die Transportvorrichtung P hat einen aus etwa geraden Teilstücken 7,7' und 7'' sowie angeformten Bogenstücken 6 und 6' gebildeten Tragarm 3. Der Tragarm 3 ist am oberen Teilstück 7 mit einem daran befestigten Lagerteil 4 versehen, in welchem ein Tragbügel 5 um eine nicht dargestellte Achse schwenkbar gelagert ist. Der Tragbügel 5 ist mit dem anderen, freien Ende an dem Transportseil 2 angeordnet und mit diesem in nicht näher dargestellter Weise wirkverbunden. Zur Erreichung einer Stabilisierung der Lage des Tragarms 3 kann beispielsweise im unteren Bereich des Tragarms 3 zusätzlich ein Gewichtsteil 8 angeordnet werden, welches in nicht näher dargestellter Weise am Teilstück 7'' befestigt, vorzugsweise auswechselbar befestigt ist.

An dem im wesentlichen horizontal orientierten Teilstück 7' des Tragarms 3 ist ein in der Gesamtheit mit 9 bezeichnetes Schlosselement angeordnet.
Das Schlosselement 9 hat zwei Seitenteile 10 und 11, welche an dem Teilstück 7' des Tragarms 3 befestigt und zur Lagerung einer dazwischen angeordneten Lastzange 12 im Abstand zueinander angeordnet sind. Die schematisch dargestellte Lastzange 12 steht mit einem im Schlosselement 9 schwenkbar gelagerten Betätigungsglied 15 in Wirkverbindung.
In geschlossenem Zustand der Lastzange 12 ist, wie in Fig.1 dargestellt, ein Lastring 13 eingehängt, an welchem über ein entsprechendes Bindeorgan 14 die Last 1, beispielsweise eine Bananenstaude oder dergleichen angehängt ist. Zur Entnahme der Last 1 wird die Lastzange 12 geöffnet, wobei das Öffnen im wesentlichen durch eine Drehung des an einem Bolzen 42 in den Seitenteilen 10,11 gelagerten Betätigungsgliedes 15 um die nicht eingezeichnete Längsachse des Bolzens 42 erfolgt.

Das zur Freigabe der Last 1 beziehungsweise des Lastrings 13 erforderliche öffnen der Lastzange 12 wird später in Verbindung mit der entsprechend zugeordneten Übergabestation R beschrieben.

Die entsprechend zugeordnete Übergabestation R umfasst, wie in Fig.1 dargestellt, eine etwa in parallelem Abstand zum Transportseil 2 angeordnete Schiene 21, welche über entsprechende Befestigungslaschen 25 an einem oder mehreren nicht dargestellten Trägerorganen befestigt sind. Weiterhin erkennt man in Fig.1 ein an der Schiene 21 angeordnetes Fahrwerk 20.
Das Fahrwerk 20 ist über Laschen 22,22' (in Fig.1 ist nur die eine Lasche 22 dargestellt) und entsprechend daran angeordneten Rollen 23 in einer entsprechend in Längsrichtung der Schiene 21 orientierten Nut 24 der Schiene 21 gelagert und relativ zu der Schiene 21 in Transportrichtung X' verstellbar. Das Fahrwerk 20 hat einen in Längsrichtung der Schiene 21 orientierten Träger 26, welcher an den Enden jeweils mit einem die Kinetische Energie kompensierenden Stosselement 27,27' versehen ist. An dem Träger 26 sind weiterhin zwei im Abstand zueinander angeordnete Ösen 28 und 28' befestigt, in welchen über einen Bolzen 29 oder dergleichen ein plattenartiges Pendelstück 30 gelagert ist. An dem freien Ende des Pendelstücks 30 ist jeweils ein Haltedorn 17,17' angeordnet und in nicht näher dargestellter Weise befestigt. Das Pendelstück 30 mit den beiden Haltedornen 17,17' ist etwa quer zu der in Pfeilrichtung X' orientierten Längsachse (nicht dargestellt) des Bolzens 29 pendelnd schwenkbar in den beiden Ösen 28 und 28' gelagert.

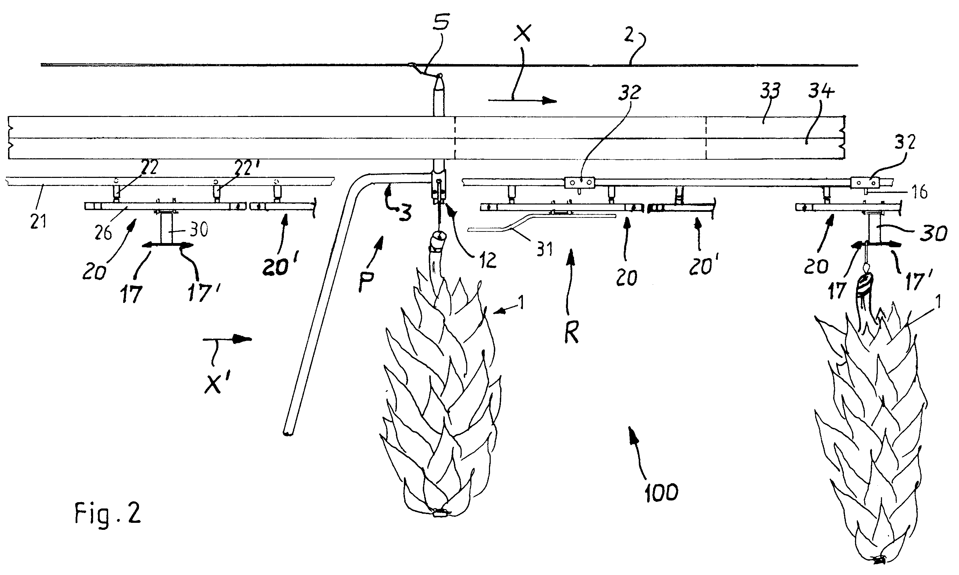

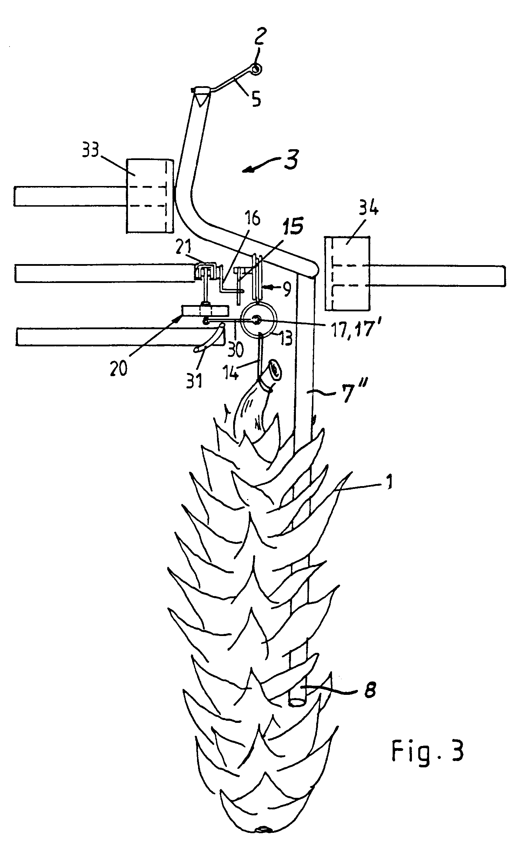

Fig.2 zeigt die in Ansicht dargestellte Einrichtung 100 und man erkennt das Transportseil 2 mit der mittels dem Tragbügel 5 daran angeordneten Transportvorrichtung P für die in Transportrichtung X zu transportierende und in der Übergabestation R dem momentan zugeordneten Fahrwerk 20 zu übergebende Last 1. Im Abstand zu dem Transportseil 2 ist die in Transportrichtung orientierte Schiene 21 angeordnet, an welcher zum Verschieben der angehängten Last 1 mehrere Fahrwerke 20,20' angeordnet sind.
Die einzelnen Fahrwerke 20,20' werden mit nicht dargestellten Mitteln in Transportrichtung X' der Übergabestation R zugeführt und sofern erforderlich, über entsprechende Schienen-Verzweigungen oder Weichen in eine andere, nicht dargestellte Richtung weitertransportiert.
In Fig.2 ist das Fahrwerk 20 als Ausführungsbeispiel in verschiedenen Bewegungsabläufen der Einrichtung 100 dargestellt und man erkennt in der linksseitigen Position den mittels der Laschen 22,22' hängend an der Schiene 21 angeordneten Träger 26 sowie das nach unten hängende Pendelstück 30 mit den beiden Haltedornen 17 und 17' sowie ein Teilstück des anderen Fahrwerks 20'.
Beim Erreichen der mittleren Position (Fig. 2), welche etwa der Übergabeposition entspricht, gleitet das am Fahrwerk 20 angeordnete Pendelstück 30 auf ein entsprechend angeordnetes und in nicht näher dargestellter Weise befestigtes Kufenstück 31, wodurch das Pendelstück 30 in eine im wesentlichen waagerechte Stellung (Fig.3) angehoben wird. Etwa gleichzeitig nähert sich der Übergabestation R die Transportvorrichtung P mit der am Tragarm 3 angehängten Last 1. Hierbei wird von einem im wesentlichten an der Schiene 21 angeordneten Hebel 16 (Fig.3) das Betätigungsglied 15 des Schlosselements 9 (Fig.1) verschwenkt und die damit in Wirkverbindung stehende Lastzange 12 zur Übergabe der Last 1 geöffnet.

Der zur Kontaktierung in den Bewegungsbereich des Betätigungsgliedes 15 ragende Hebel 16 ist an einem an der Schiene 20 angeordneten Schieber 32 befestigt. Bei geöffneter Lastzange 12 wird der Lastring 13 frei gegeben und mit der daran hängenden Last 1 dem Haltedorn 17,17' übergeben. Bei einer weiteren Bewegung des Fahrwerks 20 gleitet das Pendelstück 30 wieder von dem Kufenstück 31, welches dann, wie in Fig.2 rechts dargestellt, mit der Last 1 nach unten hängend weiter transportiert werden kann. Weiterhin erkennt man in Fig. 2 zwei parallel zum Tragseil 2 orientierte und höhenversetzt sowie quer zur Transportrichtung im Abstand zu einander angeordnete (Fig.3) Führungsträger 33 und 34.

In Fig.3 ist in Seitenansicht die Position und Phase dargestellt, in welcher die Last 1 mit dem Lastring 13 übergeben und am Haltedorn 17,17' angehängt ist. Weiterhin erkennt man den vorzugsweise zur besseren Positionierung zwischen den beiden, vorzugsweise höhenversetzt zueinander angeordneten Führungsträgern 33 und 34 angeordneten Tragarm 3. Der Tragarm 3 ist beispielsweise mit seinem oberen Teilstücken 6,6' und 7,7' zwischen den beiden an nicht dargestellten Stützen gelagerten und befestigten Führungsträger 33 und 34 angeordnet. In dieser Darstellung ist das an der Schiene 20 schwenkbar gelagerte Pendelstück 30 mit dem Kufenstück 31 in Eingriff (Fig.3.).

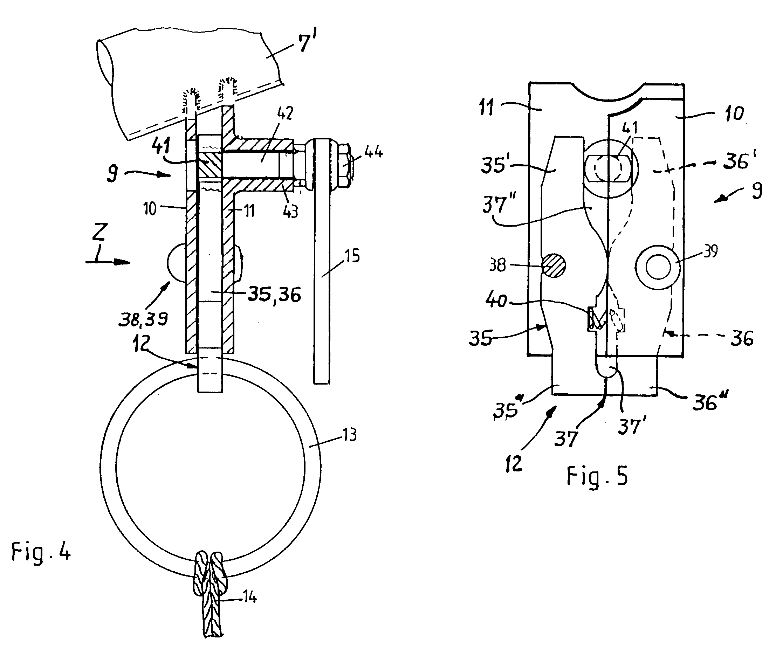

Fig.4 zeigt als erstes Ausführungsbeispiel das in Schnittansicht dargestellte Schlosselement 9 und man erkennt die beiden an dem Teilstück 7' des Tragarms 3 befestigten Seitenteile 10 und 11. Zwischen den beiden Seitenteilen 10,11 ist die in der Gesamtheit mit 12 bezeichnete Lastzange angeordnet. An dem einen Seitenteil 11 ist eine Lagerhülse 43 angeordnet, in welcher der Bolzen 42 um seine Längsachse drehbar gelagert ist. An dem einen Ende des Bolzens 42 ist das hebelartig ausgebildete Betätigungsglied 15 gelagert und durch eine Schraubenmutter 44 oder dergleichen gehalten. An dem anderen Ende des Bolzens 42 ist ein Nockenstück 41 vorgesehen, welches vorzugsweise angeformt ist. Das Betätigungsglied 15 sowie das Nockenstück 41 ist mit dem Bolzen 42 derart wirkverbunden, dass eine gemeinsame Drehbewegung der Teile 15,41,42 um die nicht näher bezeichnete und dargestellte Längsachse des Bolzens 42 gewährleistet ist. Weiterhin erkennt man den an der Lastzange 12 angehängten Lastring 13 mit dem Bindeorgan 14 für die Last 1.

Fig.5 zeigt das gemäss Pfeilrichtung Z in Fig.4 in Seitenansicht dargestellte Schlosselement 9, wobei hier zur besseren Darstellung der einzelnen Zangen-Elemente nur die eine Hälfte des Seitenteils 10 dargestellt ist.
Die Lastzange 12 umfasst im wesentlichen zwei Zangenteile 35 und 36, welche jeweils an einem in den Seitenteilen 10,11 gelagerten Achszapfen 38 und 39 schwenkbar gelagert sind. Die beiden Zangenteile 35 und 36 sind derart ausgebildet, dass die korrespondierend zueinander angeordneten Teilstücke 35' und 36' im oberen Bereich eine Ausnehmung 37'' für das am Bolzen 42 angeformte Nockenstück 41 bilden. Im unteren Bereich bilden die beiden, entsprechend geformten Teilstücke 35'' und 36'' ein Zangenmaul 37'. Die beiden, im wesentlichen das Zangenmaul 37' bildenden Teilstücke 35'' und 36'' sind im unteren Bereich 37 gegeneinander gepresst. Zwischen den beiden unteren Teilstücken 35'' und 36'' der Lastzange 12 ist weiterhin ein Federelement 40 angeordnet. Mittels der Rückstellkraft des Federelements 40 wird bei entsprechender Stellung des am Bolzen 42 angeformten Nockenstücks 41 das Zangenmaul 37' in nicht näher dargestellter Weise geöffnet.

In der in Fig.5 dargestellten Position des Nockenstücks 41 ist die Lastzange 12 gegen die Rückstellkraft des Federelements 40 geschlossen. Bei Kontaktierung des Betätigungsgliedes 15 durch den Hebel 16 (Fig.1,3) erfolgt eine Verdrehung des Nockenstücks 41 um die Längsachse des Bolzens 42, so dass durch die Rückstellkraft des Federelements 40 das öffnen des Zangenmauls 37' erreicht wird.

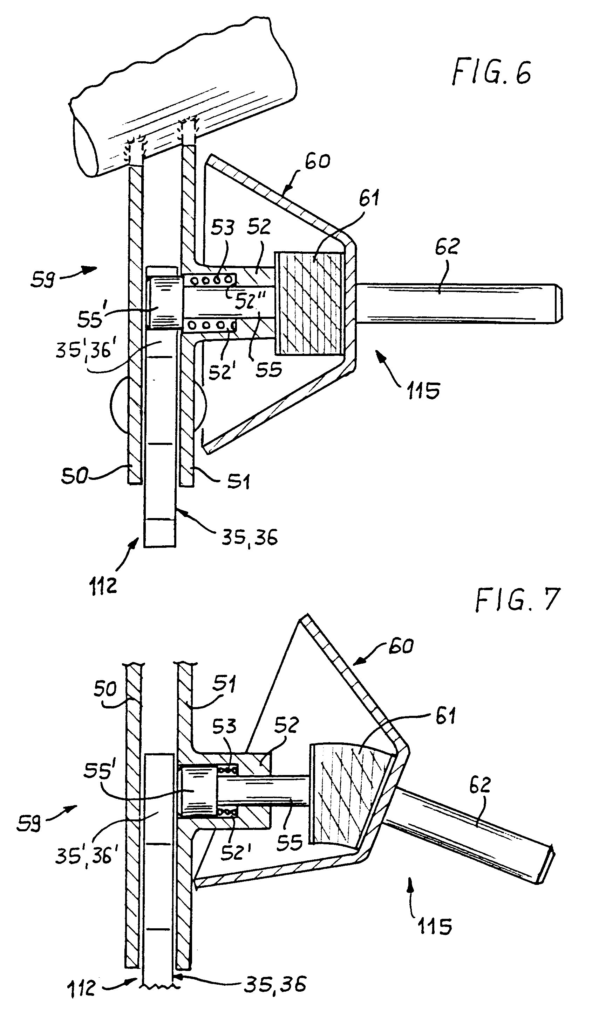

Fig.6 zeigt als weiteres Ausführungsbeispiel ein in der Gesamtheit mit 59 bezeichnetes Schlosselement und man erkennt zwei im Abstand zueinander angeordnete, an dem Teilstück 7' des Tragarms 3 befestigte Seitenteile 50 und 51, zwischen welchen eine schematisch dargestellte Lastzange 112 angeordnet ist. Die zweite Lastzange 112 mit den einzelnen an den Seitenteilen gelagerten Teilen ist analog der vorstehend in Verbindung mit dem Schlosselement 9 gemäss Fig.4 und Fig.5 beschriebenen ersten Lastzange 12 ausgebildet.
Das eine Seitenteil 51 ist mit einer angeformten Lagerbüchse 52 versehen, in welcher ein mit einem Kopfstück 55' versehener Bolzen 55 in axialer Richtung desselben verschiebbar gelagert ist. In einer Ausnehmung 52' der Lagerbüchse 52 ist weiterhin eine Druckfeder 53 angeordnet, welche einerseits am Kopfstück 55' des Bolzens 55 und andererseits an der Wand 52'' der Ausnehmung 52' abgestützt ist.
An dem dem Kopfstück 55' gegenüberliegenden Ende des Bolzens 55 ist mit nicht dargestellten Mitteln ein als Federelement wirkender Gummiklotz 61 angeordnet und befestigt. An dem Gummiklotz 61 ist weiterhin eine glockenartig ausgebildete Kappe 60 angeordnet, welche durch einen mit dem Gummiklotz 61 in nicht dargestellter Weise verschraubten Kontaktarm 62 an dem Gummiklotz 61 befestigt ist.

Abweichend von dem Schlosselement 9 gemäss Fig.4 und 5, wird bei dem Schlosselement 59 gemäss Fig.6 und 7 durch eine entsprechende Betätigung des Kontaktarms 62 der Bolzen 55 gegen die Rückstellkraft der Druckfeder 53 in axialer Richtung des Bolzens 55 bewegt, wodurch das die Lastzange 112 freigebende Kopfstück 55' in die Ausnehmung 52' gelangt. In dieser, in Fig.7 dargestellten und durch die an dem Seitenteil 51 anliegende Kappe 60 begrenzten Stellung, ist die Druckfeder 53 sowie der Gummiklotz 61 entsprechend belastet. Sobald der Kontaktarm 62 ausser Eingriff des an der Schiene 20 angeordneten Hebels 16 (Fig.1,3) gelangt, wird durch die Rückstellkraft des Gummiklotzes 61 und durch die Rückstellkraft der Druckfeder 53 der Bolzen 55 in axialer Richtung verschoben und dabei, wie in Fig.6 dargestellt, das Kopfstück 55' wieder mit der Lastzange 112 zur Erreichung der Schliess-Stellung in Wirkverbindung gebracht. Die Wirkungsweise, d.h., das Öffnen und Schliessen der beiden Zangenteile 35,36 der zweiten Lastzange 112 erfolgt im wesentlichen analog der vorstehend in Verbindung mit Fig.4,5 beschriebenen Wirkungsweise der ersten Lastzange 12.

Es wird darauf hingewiesen, dass Abwandlungen der Transportvorrichtung P und des am Tragarm 3 angeordneten Schlosselementes 9 und 59 mit der Lastzange 12 und 112, sowie Abwandlungen der Übergabestation R innerhalb des Schutzbereichs durchaus möglich sind.

## Patentansprüche

1. Einrichtung zum Transportieren und Übergeben einer Last, mit einem umlaufend angetriebenen Transportseil (2) und mindestens einer daran angeordneten und im wesentlichen als Tragarm (3) für die Last (1) ausgebildeten Transportvorrichtung (P) sowie mit mindestens einer Übergabestation (R), welche an einer etwa in parallelem Abstand sowie in Längsrichtung des Transportseils (2) orientierten Schiene (21) angeordnet und mit Mitteln in Form eines Hebels (16) versehen ist, welcher bei der Transportbewegung des mit einem Schlosselement (9;59) für die Lagerung einer Lastzange (12;112) versehenen Tragarms (3) mit einem mit der Lastzange wirkverbundenen Betätigungsglied derart in Eingriff bringbar sind, dass ein zwangsläufiges Öffnen der Lastzange für die Übergabe der daran angehängten Last (1) erfolgt, **dadurch gekennzeichnet**, dass der Übergabestation (R) mindestens ein an der Schiene (21) angeordnetes und relativ dazu in Transportrichtung verschiebbares Fahrwerk (20) mit mindestens einem daran angeordneten Haltedorn (17) zuführbar ist, wobei der Haltedorn (17) zur hängenden Aufnahme mit der von der geöffneten Lastzange (12;112) freigegebenen Last (1) in Eingriff bringbar ist.

2. Einrichtung nach Anspruch 1, **dadurch gekennzeichnet**, dass das Fahrwerk (20) einen etwa in parallelem Abstand sowie in Längsrichtung der Schiene (21) orientierten Träger (26) umfasst, an welchem ein mit dem Haltedorn (17) versehenes und beim Auflaufen auf ein im Bereich der Übergabestation (R) angeordnetes Kufenstück (31) aus einer Ruhestellung in eine etwa waagerechte, quer zur Transportrichtung orientierte Übergabestellung schwenkbares Pendelstück (30) angeordnet ist.

3. Einrichtung nach Anspruch 1, **dadurch gekennzeichnet**, dass die Lastzange (12;112) zwei jeweils an einem im Schlosselement (9;59) angeordneten Achszapfen (38,39) gelagerte und in bezug auf die beiden Achszapfen (38,39) an dem einen Ende mit einem Zangenmaul (37') versehene und an dem anderen Ende durch eine Ausnehmung (37'') beabstandete und jeweils um die Achszapfen (38,39) relativ zueinander schwenkbare Zangenteile (35,36) umfasst, welche durch einen im Bereich der Ausnehmung (37'') zwischen den beiden Zangenteilen (35,36) angeordneten Bolzen (42;55) gegen die Rückstellkraft einer im Bereich des Zangenmauls (37') angeordneten Druckfeder (40) in einer Schliessstellung des Zangenmauls (37') arretierbar sind.

4. Einrichtung nach den Ansprüchen 1 und 3, **dadurch gekennzeichnet**, dass der an der Schiene (21) angeordnete Hebel (16) mit dem Betätigungsglied (15) der Lastzange (12) in Eingriff bringbar ist und dabei den Bolzen (42) derart um seine Längsachse verdreht, dass ein am Bolzen (42) angeformtes und in der Ausnehmung (37'') zwischen den beiden mit der Druckfeder (40) in Wirkverbindung stehenden Zangenteilen (35,36) angeordnetes Nockenstück (41) für die Öffnung des Zangenmauls (37') ausser Eingriff der beiden Zangenteile (35,36) bringbar ist.

5. Einrichtung nach den Ansprüchen 1 und 3, **dadurch gekennzeichnet**, dass der an der Schiene (21) angeordnete Hebel (16) mit dem Betätigungsglied (62) der Lastzange (112) in Eingriff bringbar ist und dabei den Bolzen (55) im wesentlichen in axialer Richtung desselben verschiebt, derart, dass ein am Bolzen (55) angeformtes und in der Ausnehmung (37'') zwischen den beiden mit der Druckfeder (40) in Wirkverbindung stehenden Zangenteilen (35,36) angeordnetes Kopfstück (55') für die Öffnung des Zangenmauls (37') ausser Eingriff der beiden Zangenteile (35,36) bringbar ist.

6. Einrichtung nach den Ansprüchen 3 und 5, **dadurch gekennzeichnet**, dass an dem Bolzen (55) ein Gummiklotz (61) angeordnet und mit dem Betätigungsglied (62) wirkverbunden ist, wobei dieses beim Auflaufen auf den Hebel (16) gegen die federelastische Rückstellkraft des Gummiklotzes (61) derart verschwenkt wird, dass der Bolzen (55) durch die in axialer Richtung desselben orientierte Schiebe bewegung mit dem Kopfstück (55) ausser Eingriff der Zangenteile (35,36) bringbar ist.

7. Einrichtung nach Anspruch 6, **dadurch gekennzeichnet**, dass die Schwenkbewegung des Betätigungsgliedes (62) gegen die Rückstellkraft des Gummiklotzes (61) sowie gegen die Rückstellkraft einer am Bolzen (55) angeordneten Druckfeder (53) erfolgt und die Schwenkbewegung durch eine mit dem Betätigungsglied (62) sowie mit dem Gummiklotz (61) wirkverbundene Kappe (60) begrenzt ist.

8. Einrichtung nach Anspruch 1, **dadurch gekennzeichnet**, dass der aus mehreren durch Bogenstücke (6,6') miteinander verbundenen Teilstücken (7,7',7'') bestehende Tragarm (3) zwischen zwei in parallelem Abstand zueinander angeordneten und in Transportrichtung orientierten Trägern (33,34) derart geführt ist, dass die an der Lastzange (12;112) hängende Last (1) im wesentlichen parallel zu dem etwa vertikal nach unten gerichteten Teilstück (7'') angeordnet ist.

9. Einrichtung nach Anspruch 8, **dadurch gekennzeichnet**, dass der Tragarm (3) im wesentlichen mit dem zur Befestigung des Schlosselements (9;59) für die Lastzange (12;112) ausgebildeten Teilstück (7') zwischen den beiden vorzugsweise höhenversetzt zueinander angeordneten Führungsträgern (33,34) angeordnet und geführt ist.

10. Einrichtung nach Anspruch 8, **dadurch gekennzeichnet**, dass an dem Tragarm (3), vorzugsweise an dem etwa vertikal nach unten gerichteten Teilstück (7'') des Tragarms (3) zusatzlich ein Gewichtsteil (8) angeordnet ist.

## Claims

1. Arrangement for conveying and transferring a load with a rotatably driven conveying cable (2) and at least one conveying device (P) arranged thereon and designed substantially as a carrying arm (3) for the load (1) and with at least one transfer station (R) which is arranged on a rail (21) orientated with roughly parallel spacing and in the longitudinal direction of the conveying cable (2) and is provided with means in the form of a lever (16) which, during the conveying movement of the carrying arm (3) provided with a lock element (9; 59) for the mounting of a load gripper (12; 112), can be brought into engagement with an actuating element cooperating with the load gripper in such a way that the load gripper is inevitably opened for the transfer of the load (1) suspended thereon, characterised in that at least one running gear (20) which is arranged on the rail (21) and is movable relative thereto in the conveying direction with at least one holding mandrel (17) arranged thereon can be supplied to the transfer station (R), wherein the holding mandrel (17) can be brought into engagement with the load (1) released by the opened load gripper (12; 112) for suspended reception.

2. Arrangement according to Claim 1, characterised in that the running gear (20) comprises a carrier (26) which is orientated with roughly parallel spacing and in the longitudinal direction of the rail (21) and on which there is arranged a pendulum member (30) which is provided with the holding mandrel (17) and, as it runs onto a runner (31) arranged in the region of the transfer station (R), can pivot from a rest position into a substantially horizontal transfer position orientated transversely to the conveying direction.

3. Arrangement according to Claim 1, characterised in that the load gripper (12; 112) comprises two gripper parts (35, 36) which are mounted on a respective journal (38, 39) arranged in the lock element (9; 59) and are provided with a gripper mouth (37') at one end with respect to the two journals (38, 39), are spaced at the other end by a recess (37''), are pivotal relative to one another round the respective journal (38, 39) and can be halted in a closed position of the gripper mouth (37') against the restoring force of a compression spring (40) arranged in the region of the gripper mouth (37') by a bolt (42; 55) arranged between the two gripper parts (35, 36) in the region of the recess (37'').

4. Arrangement according to Claims 1 and 3, characterised in that the lever (16) arranged on the rail (21) can be brought into engagement with the actuating element (15) of the load gripper (12) and in so doing rotates the bolt (42) round its longitudinal axis in such a way that a cam member (41) which is shaped on the bolt (42) and is arranged in the recess (37'') between the two gripper parts (35, 36) cooperating with the compression spring (40) can be disengaged from the two gripper parts (35, 36) for opening the gripper mouth (37').

5. Arrangement according to Claims 1 and 3, characterised in that the lever (16) arranged on the rail (21) can be brought into engagement with the actuating element (62) of the load gripper (112) and, in so doing, displaces the bolt (55) substantially in the axial direction thereof in such a way that a head piece (55') shaped on the bolt (55) and arranged in the recess (37'') between the two gripper parts (35, 36) cooperating with the compression spring (40) can be disengaged from the two gripper parts (35, 36) for opening the gripper mouth (37').

6. Arrangement according to Claims 3 and 5, characterised in that a rubber block (61) is arranged on the bolt (55) and cooperates with the actuating element (62), the actuating element (62) being pivoted against the resilient restoring force of the rubber block (61) as it runs onto the lever (16) in such a way that the bolt (55) can be disengaged from the gripper parts (35, 36) by the sliding movement orientated in the axial direction thereof with the headpiece (55).

7. Arrangement according to Claim 6, characterised in that the pivoting movement of the actuating element (62) takes place against the restoring force of the rubber block (61) and against the restoring force of a compression spring (53) arranged on the bolt (55) and the pivoting movement is limited by a cap (60) cooperating with the actuating element (62) and with the rubber block (61).

8. Arrangement according to Claim 1, characterised in that the carrying arm (3) consisting of several members (7, 7' 7'') connected to one another by curved members (6, 6') is guided between two carriers (33, 34) arranged with mutual parallel spacing and orientated in the conveying direction in such a way that the load (1) hanging on the load gripper (12; 112) is arranged substantially parallel to the member (7'') directed roughly vertically downwardly.

9. Arrangement according to Claim 8, characterised in that the carrying arm (3) is arranged and guided substantially with the member (7') designed for fastening the lock element (9; 59) for the load gripper (12; 112) between the two guide carriers (33, 34) which are preferably arranged so as to be mutually adjustable in height.

10. Arrangement according to Claim 8, characterised in that a weight (8) is additionally provided on the carrying arm (3), preferably on the substantially vertically downwardly directed member (7'') of the carrying arm (3).

## Revendications

1. Dispositif de transport et de transfert d'une charge, comportant un câble de transport (2) entraîné en rotation et au moins un dispositif de transport (P) placé sur celui-ci et conçu essentiellement en tant que bras de support (3) pour la charge (1), ainsi qu'au moins un poste de transfert (R) qui est placé sur un rail (21) orienté à peu près à une distance parallèle et dans la direction longitudinale du câble de transport (2) et qui est pourvu de moyens sous forme d'un levier (16), lesquels, lors du mouvement de transport du bras de support (3) pourvu d'un élément de serrure (9 ; 59) pour le support d'une pince de chargement (12 ; 112), peuvent être amenés en prise avec un organe d'actionnement, relié activement à la pince de chargement, de manière qu'il se produise une ouverture forcée de la pince de chargement pour le transfert de la charge (1) accrochée à celle-ci, caractérisé en ce qu'au poste de transfert (R) peut être amené au moins un chariot (20) placé sur le rail (21) et déplaçable par rapport à celui-ci dans la direction de transport, avec au moins une broche de retenue (17) placée sur celui-ci, la broche de retenue (17) pouvant être amenée en contact, en vue de la reprise en suspension, avec la charge (1) libérée par la pince de chargement (12 ; 112) ouverte.

2. Dispositif selon la revendication 1, caractérisé en ce que le chariot (20) comporte un support (26) orienté à peu près à distance parallèle et dans la direction longitudinale du rail (21), sur lequel est placée une pièce pendulaire (30) pourvue de la broche de retenue (17) et qui, au passage sur un patin (31), placée dans la zone du poste de transfert (R), peut pivoter d'une position de repos dans une position de transfert à peu près horizontale, orientée transversalement à la direction de transport.

3. Dispositif selon la revendication 1, caractérisé en ce que la pince de chargement (12 ; 112) comprend deux parties de pince (35, 36) montées chacune sur un axe (38, 39) placé dans l'élément de serrure (9 ; 59) et, à une extrémité, pourvues par rapport aux deux axes (38, 39) d'une mâchoire de pince (37') et, à l'autre extrémité, espacées du fait d'un évidement (37'') et pouvant pivoter chacune autour des axes (38, 39), l'une par rapport à l'autre, lesquelles parties de pince peuvent être bloquées par un boulon (42 ; 55), placé dans la région de l'évidement (37''), entre les deux parties de pince (35, 36), contre la force de rappel d'un ressort de pression (40), placé dans la région de la mâchoire de pince (37'), dans une position de fermeture de la mâchoire de pince (37').

4. Dispositif selon les revendications 1 et 3, caractérisé en ce que le levier (16), placé sur le rail (21), peut être amené en prise avec l'organe d'actionnement (15) de la pince de chargement (12) et fait tourner dans ce cas le boulon (42) autour de son axe longitudinal, de manière qu'une pièce de came (41), formée sur le boulon (42) et placée dans l'évidement (37''), entre les deux parties de pince (35, 36) en liaison active avec le ressort de pression (40), peut être désengagée des deux parties de pince (35, 36), pour l'ouverture de la mâchoire de pince (37').

5. Dispositif selon les revendications 1 et 3, caractérisé en ce que le levier (16), placé sur le rail (21), peut être amené en prise avec l'organe d'actionnement (62) de la pince de chargement (112) et déplace ce faisant le boulon (55) essentiellement dans la direction axiale de celui-ci, de manière qu'une pièce de tête (55'), formée sur le boulon (55) et placée dans l'évidement (37'') entre les deux parties de pince (35, 36) en liaison active avec le ressort de pression (40), puisse être dégagée des deux parties de pince (35, 36), pour l'ouverture de la mâchoire de pince (37').

6. Dispositif selon les revendications 3 et 5, caractérisé en ce que sur le boulon (55) est placé un bloc de caoutchouc (61) qui est en liaison active avec l'organe d'actionnement (62), celui-ci étant pivoté, lors de la montée sur le levier (16), à l'encontre de la force de rappel élastique du bloc de caoutchouc (61), de manière que le boulon (55) puisse être dégagé, avec la pièce de tête (55), des parties de pince (35, 36), par le mouvement de coulissement orienté dans la direction axiale du boulon.

7. Dispositif selon la revendication 6, caractérisé en ce que le mouvement de pivotement de l'organe d'actionnement (62) s'effectue à l'encontre de la force de rappel du bloc de caoutchouc (61) ainsi qu'à l'encontre de la force de rappel d'un ressort de pression (53), placé sur le boulon (55) et le mouvement de pivotement est limité par un capuchon (60) relié activement avec l'organe d'actionnement (62) ainsi qu'avec le bloc de caoutchouc (61).

8. Dispositif selon la revendication 1, caractérisé en ce que le bras de support (3), constitué de plusieurs pièces (7, 7', 7'') reliées entre elles par des pièces en arc (6, 6'), est guidé entre deux supports (33, 34) disposés espacés et parallèles entre eux et orientés dans la direction du transport, de manière que la charge (1), accrochée à la pince de chargement (12 ; 112), soit sensiblement parallèle à la pièce (7'') dirigée à peu près verticalement vers le bas.

9. Dispositif selon la revendication 8, caractérisé en ce que le bras de support (3) est placé et guidé essentiellement avec la pièce (7') conçue pour la fixation de l'élément de serrure (9 ; 59) pour la pince de chargement (12 ; 112), entre les deux supports de guidage (33, 34) de préférence décalés en hauteur l'un par rapport à l'autre.

10. Dispositif selon la revendication 8, caractérisé en ce que sur le bras de support (3), de préférence sur la pièce (7'') du bras de support (3), dirigé à peu près verticalement vers le bas, il est prévu en supplément un poids (8).
